# EUROPEAN PATENT APPLICATION

(11) **EP 1 531 022 A2**
(43) Date of publication of application: **18.05.2005**
(21) Application number: 04105349.7
(22) Date of filing: 28.10.2004
(51) Int. Cl.: B22F 7/06

(54) **Process for producing bushes of steel and/or other suitable metal, with a lining of material with a low coefficient of friction, and composite bushes produced by this process**

(30) Priority: 12.11.2003 IT BO20030668
(71) Applicant: R.C.M. Italiana S.r.l., 40012 Lippo di Calderara di Reno (IT)
(72) Inventor: BINAZZI, Vincenzo, 40133, BOLOGNA (IT)
(74) Representative: Porsia, Dino, Dr.

(57) **Abstract**

The invention relates to bushes (1-2) of steel and/or other suitable metal, provided with lining bushes (2) of material with a low coefficient of friction, for example for the production of guide bushes for moulds or for other uses, or for the production of cylindrical hinges or pivots, characterized in that at least the bush (2) of material with a low coefficient of friction is formed by sintering and in that the surfaces of the bushes in contact with each other are fixed together by welding, for example by braze welding and/or diffusion.

## Description

The invention relates to composite bushes for moulds, in which the guide pillars of the said moulds slide when they are brought together with, or removed from, the corresponding counter-moulds. The composite bushes which are most commonly used at present are of the type consisting of an outer shell of steel and an inner bush of bronze and/or other material with a low coefficient of friction, to provide the robustness of steel combined with the slidability of bronze. At the present time, the bronze bushes, made by any method, are press-fitted into the steel bushes, but the resulting product has a very limited average life, and, when first engaged with the guide pillars, the bronze bush tends to become detached from the corresponding steel bush. To overcome this problem, when the bushes are to be used for particularly valuable products, for example racing vehicles, there is a known way of depositing the inner bronze lining on the inner surface of the steel bush, by an electrolytic process, in such a way that the bronze bush is securely cemented to the steel and does not become detached in the same ways as a conventional bush. This technology requires long processing times, has a high cost, and results in a product which inevitably has a very high cost.

The invention proposes bushes which have the same advantages of strength and reliability as the bushes produced by the galvanic method, but have a lower cost, and which have bronze bushes which are sufficiently porous and therefore more receptive to the lubricant which is periodically spread on the guide pillars to promote their sliding relative to the bushes. The characteristics of the new process, as indicated also in the attached claims, will be made clear by the following description of a preferred embodiment of the process, illustrated purely by way of example and without restrictive intent in the figures on the single attached sheet of drawing, in which:
- Figs. 1 and 2 show the steel bush and the bronze bush respectively, seen in cross section along an axial plane;
- Fig. 3 shows, partially in section, the step in which the bronze bush is joined to the steel bush, while the surfaces of the two bushes coming into contact with each other are treated with an antioxidant material;
- Figure 4 shows, partially in section, the step in which the composite bush as shown in Figure 3 is subjected to the next step which results in the braze welding of the bronze bush to the steel bush.

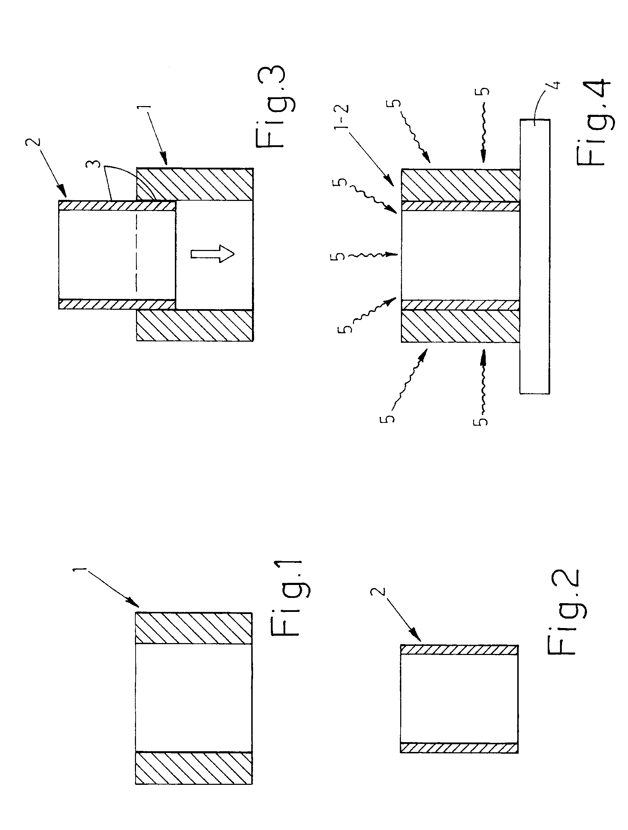

In Figure 1, the number 1 indicates the steel bush, formed by any method, for example by turning operations. In Figure 2, the number 2 indicates the bush of bronze or other anti-friction material, which according to the invention is formed by sintering. Supplementary powders of a material or alloy of materials having a melting point below that of the materials forming the said bush 2, to enhance its anti-friction characteristics, for example powders based on tin, silver, lead, copper and/or other suitable materials, are added in the correct proportion to the powdered material forming the bush 2 and are mixed uniformly. During the step of forming the bush 2 by sintering in the appropriate moulds, the composite material of which it consists is adequately pressed, substantially as in the known art, while it is subjected to a temperature below the usual temperature, which is sufficient to impart consistency to the said bush, but is not such that the said supplementary powder is melted.

The external diameter of the bush 2 is such that it can subsequently be fitted with minimum clearance into the steel bush 1, as shown in the step of Figure 3. During this step, at least one or both of the surfaces of the bushes 1 and/or 2 which come into contact with each other are treated with any suitable material 3 having anti-oxidant or fluxing characteristics, for example a material based on borax and boric acid and/or other suitable materials.

In the next step shown in Figure 4, the composite bush 1-2 as shown in the step of Figure 4, simply resting on a suitable supporting base 4 for example, is returned to the sintering furnace or another furnace, to be subjected to heating 5 to suitable temperatures and for a suitable time for the completion of the process of sintering the material which forms the inner bush 2 and which also causes the melting of the said supplementary powders, which weld the bush 2 closely and in an uniformly distributed way to the bush 1 by means of the surfaces coming into contact with each other, which, having previously had the antioxidant or fluxing material 3 applied to them, are now perfectly clean and ready for welding to each other.

After the cycle that has been described, the composite bush can be machined with machine tools, to provide it with suitable external and internal dimensions and/or shapes for the intended use of the said bush. In this step, grooves for lubrication and/or seats for housing powder scraper rings, sealing rings and/or rings for other uses can be formed, for example, on the inner surface of the bush 2.

The bush 2 produced by this process is sufficiently porous and better prepared to absorb and retain any suitable lubricating fluid with which it may be impregnated, both because it is formed by sintering and because it has a low final content of the supplementary powders which have carried out the process of welding to the outer steel bush.

It is to be understood that bushes of steel and/or other metal having bushes of anti-friction material on their outer surfaces, or on both their outer and their inner surfaces, can be formed by the method which has been described and are to be considered as protected by the present patent application.

It is also to be understood that cylindrical bushes, hinges or pivots for various uses, including uses other than those of the bushes considered here, can be formed by the method described, and that they are to be considered as protected.

## Claims

1. Process for producing bushes of steel or other suitable metal, with an inner lining bush of bronze or other material with a low coefficient of friction, for example for the production of guide bushes for moulds or for other uses, **characterized by** the sequence of the following steps of operation:
- formation of the steel bush (1) by any method;
- formation by the sintering process of the bush (2) of bronze or other anti-friction material, with such dimensions that it can be fitted with minimum clearance into the said steel bush (1), with the addition, to the basic powders forming the bush, of supplementary powders of a material or an alloy of materials, having a melting point below that of the basic powders of which the said bush (2) consists, for example powders based on tin, silver, lead, copper and/or other suitable materials, and, during the step of forming this bush (2) in the appropriate mould, the composite material of which it consists being pressed adequately, and being subjected to a temperature below the temperature which is sufficient to impart consistency to the said bush, but which is such that the said supplementary powders are not melted;
- insertion of the bronze bush (2) into the steel bush (1), while any suitable material (3) having anti-oxidant or fluxing characteristics, for example a material based on borax and boric acid and/or other suitable materials, is placed on the surfaces of the two bushes which come into contact with each other;
- heating of the composite bush (1, 2) resulting therefrom to suitable temperatures and for a suitable time for the completion of the process of sintering the material forming the inner bush (2), which simultaneously causes the melting of the said supplementary powders, which closely and with uniform distribution weld the surfaces of the two bushes in contact with each other, said contacting surfaces, previously treated with the anti-oxidant or fluxing material, being perfectly clean and prepared for welding to each other;
- machine tool finishing of the composite bush, to impart to the said composite bush the dimensions and/or shapes suitable for its intended use.

2. Process according to claim 1, **characterized in that** it comprises a final step of impregnating with any suitable lubricating material the bush of material with a low coefficient of friction (2), which is sufficiently porous and thus better prepared to undergo this treatment.

3. Bushes made from steel and/or other suitable metal, provided with lining bushes of material with a low coefficient of friction, for example for the production of guide bushes for moulds or for other uses, **characterized in that** at least the bush of material with a low coefficient of friction is formed by sintering and **in that** the surfaces of the bushes in contact with each other are fixed together by welding, for example by braze welding and/or diffusion.
